# EUROPEAN PATENT SPECIFICATION

(11) **EP 3 876 677 B1**
(45) Date of publication and mention of the grant of the patent: **17.05.2023**
(21) Application number: 20216795.3
(22) Date of filing: 23.12.2020
(51) Int. Cl.: H05B 45/50

(54) **LED DRIVING CIRCUIT AND LED LAMP**
LED-TREIBERSCHALTUNG UND LED-LAMPE
CIRCUIT DE COMMANDE DE DEL ET LAMPE À DEL

(30) Priority: 06.03.2020 CN 202020264681 U
(43) Date of publication of application: 08.09.2021
(73) Proprietor: Leedarson Lighting Co., Ltd, Zhangzhou, Fujian 363999 (CN)
(72) Inventor: LAI, Xinghan, Xiamen, Fujian 00000 (CN); WEN, Shuisheng, Xiamen, Fujian 00000 (CN); LIU, Zhengkun, Xiamen, Fujian 00000 (CN); CHEN, Xiaodeng, Xiamen, Fujian 00000 (CN); CHEN, Zhibin, Xiamen, Fujian 00000 (CN); LIN, Rongjie, Xiamen, Fujian 00000 (CN); LIN, Liping, Xiamen, Fujian 00000 (CN)
(74) Representative: Isarpatent

(56) References cited:
- US-A1- 2015 312 987
- US-B1- 10 342 089

## Description

### Technical Field

The invention relates to the technical field of lighting fixture, in particular to an LED driving circuit and an LED lamp.

### Background

For LED lamps, when the input voltage is unstable or lightning strike is encountered, the input voltage may be too high. Due to the insufficient margin of the electronic components in the circuit, it is easy to cause the electronic components to burn out or affect the service life of the electronic components, which may cause serious safety problems.

US 2015/312987 A1 discloses an analog electronic circuit for driving a string of LEDs. The analog electronic circuit includes input terminals for accepting connection to AC voltage, a current regulation circuit operatively coupled to receive an AC voltage from the input terminals and to provide an output for connection to drive the string of LEDs. Included is a current regulation circuit configured to limit the current flow through the string of LEDs on a half-cycle basis to a predetermined value. Also disclosed are an overvoltage circuit configured to switch off electrical connection between the AC voltage and the string of LEDs upon the AC reaching a predetermined high voltage value on a half-cycle basis in order to limit power. Overtemperature and power factor correction are also addressed. Also improving efficiency by shorting part of the LED string during the lower voltage phase of the input AC voltage

### Summary

The embodiments of the invention provide an LED driving circuit and an LED lamp to solve the problem in the prior art that: when the input voltage of the LED lamp is too high, due to the insufficient margin of the electronic components, it is easy to cause the electronic components to burn out or affect the service life of the electronic components.

According to the present invention, an LED driving circuit is provided as defined in independent claim 1. The LED driving circuit comprises a rectification module, a switching module and a voltage regulator.

An input of the rectification module receives external power supply, and an output of the rectification module is connected to a reference level terminal of the voltage regulator. An anode terminal of the voltage regulator is grounded, and a cathode terminal of the voltage regulator is connected to the switching module. The switching module and an LED module are connected in series to form a power supply loop.

When a voltage of the external power supply is greater than a preset voltage, the switching module is turned off according to an off command output by the voltage regulator to cut off a power supply of the LED module.

The switching module comprises a first resistor, a second resistor, a first one-directional conduction element, a switch and a constant current driving unit.

A first terminal of the first resistor is connected to the cathode terminal of the voltage regulator, and a second terminal of the first resistor is connected to a negative electrode of the first one-directional conduction element.

The first terminal of the second resistor is connected to a positive electrode power supply terminal of the LED module, and the second terminal of the second resistor is connected to a positive electrode of the first one-directional conduction element.

The input of the constant current driving unit is connected to the positive electrode of the first one-directional conduction element, and the output of the constant current driving unit is connected to a control terminal of the switch.

The first terminal of the switch is connected to a negative electrode power supply terminal of the LED module, and the second terminal of the switch is grounded.

In one embodiment, the LED driving circuit also comprises a filter module.

The filter module is connected to the reference level terminal of the voltage regulator.

In one embodiment, the filter module comprises a capacitor.

The first terminal of the capacitor is connected to the reference level terminal of the voltage regulator, and the second terminal of the capacitor is grounded.

In one embodiment, the input of the rectification module comprises a first rectifying input and a second rectifying input, and the rectification module comprises a second one-directional conduction element and a third one-directional conduction element.

The first terminal of the second one-directional conduction element is connected to the first rectifying input, and the second terminal of the second one-directional conduction element is connected to the reference level terminal of the voltage regulator.

The first terminal of the third one-directional conduction element is connected to the second rectifying input, and the second terminal of the third one-directional conduction element is connected to the reference level terminal of the voltage regulator.

In one embodiment, the LED driving circuit also comprises a voltage divider module.

The input of the voltage divider module is connected to the output of the rectification module, and the output of the voltage divider module is connected to the reference level terminal of the voltage regulator.

In one embodiment, the voltage divider module comprises a third resistor and a fourth resistor.

The first terminal of the third resistor is connected to the input of the voltage divider module, and the second terminal of the third resistor is connected to the first terminal of the fourth resistor.

The first terminal of the fourth resistor is connected to the output of the voltage divider module, and the second terminal of the fourth resistor is grounded.

In one embodiment, the LED driving circuit also comprises a rectifier bridge.

A first input and a second input of the rectifier bridge receive external power supply, and a first output of the rectifier bridge is connected to the positive electrode power supply terminal of the LED module, and a second output of the rectifier bridge is grounded.

In one embodiment, the voltage regulator is a three-terminal adjustable voltage regulator.

The second aspect of the embodiments of the invention provides an LED lamp. The LED lamp comprises any one of the LED driving circuits in the first aspect of the embodiments of the present invention and the LED module.

### Advantageous Effects

The embodiments of the invention provide an LED driving circuit. The LED driving circuit comprises a rectification module, a switching module and a voltage regulator. The switching module and an LED module are connected in series to form the power supply loop. When the voltage of the external power supply is greater than the reference voltage of the voltage regulator, the zener diode inside the voltage regulator reversely breaks down, and the voltage at the cathode terminal of the voltage regulator drops to zero, and the switching module is controlled to turn off resulting the power supply of the LED module be cut off, which can prevent the high input voltage of the LED lamp from damaging electronic components and increase the service life of the LED lamp.

### Brief Description of the Drawings

In order to explain the technical solutions in the embodiments of the present invention more clearly, the following will briefly introduce the drawings that need to be used in the description of the embodiments or the prior art. Obviously, the drawings in the following description are only some embodiments of the present invention, for those of ordinary skill in the art, they can also obtain other drawings based on these drawings without paying creative labor.
FIG. 1 is a schematic diagram of the LED driving circuit according to an embodiment of the invention; and
FIG. 2 is a circuit diagram of the LED driving circuit according to an embodiment of the invention.

### Detailed Description of Illustrative Embodiments

In the following description, for the purpose of illustration rather than limitation, specific details such as specific system structure and technology are proposed for a thorough understanding of the embodiments of the present invention. However, it should be clear to those skilled in the art that the present invention can also be implemented in other embodiments without these specific details. In other cases, detailed descriptions of well-known systems, devices, circuits, and methods are omitted to avoid unnecessary details from obstructing the description of the present invention.

In order to illustrate the technical solution of the present invention, the following specific embodiments are used to illustrate.

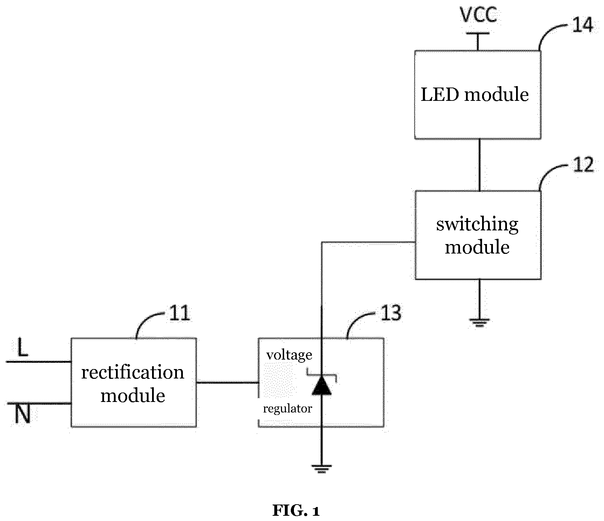

Referring to FIG. 1, an LED driving circuit known from the prior art is shown. The LED driving circuit comprises a rectification module 11, a switching module 12 and a voltage regulator 13.

An input of the rectification module 11 receives external power supply, and an output of the rectification module 11 is connected to a reference level terminal of the voltage regulator 13. An anode terminal of the voltage regulator 13 is grounded, and a cathode terminal of the voltage regulator 13 is connected to the switching module 12. The switching module 12 and an LED module 14 are connected in series to form a power supply loop.

When a voltage of the external power supply is greater than a preset voltage, the switching module 12 is turned off according to an off command output by the voltage regulator 13 thus to cut off a power supply of the LED module 14.

The switching module 12 is provided in the power supply loop, and meanwhile the switching module 12 is controlled through the voltage regulator 13. When an input voltage is higher than a reference voltage of the voltage regulator 13, the voltage regulator 13 outputs a low level and controls the switching module 12 to turn off, thereby cutting off the power supply loop of the LED module 14 to prevent the device from burned due to excessive voltage, and to avoid damaging the LED lamp, and to improve the safety and service life of the LED lamp. The switching module 12 is controlled through the voltage regulator 13 so as to make the structure of the LED driving circuit simple and the response of the LED driving circuit sensitive, which can effectively protect the LED lamp. The reference voltage of the voltage regulator 13 is the preset voltage.

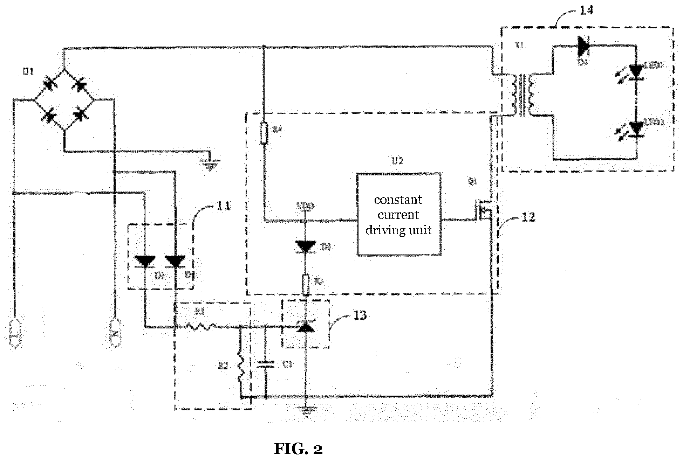

Referring to FIG. 2, which provides an embodiment of the invention, the switching module 12 comprises a first resistor R3, a second resistor R4, a first one-directional conduction element D3, a switch Q1 and a constant current driving unit U2.

A first terminal of the first resistor R3 is connected to the cathode terminal of the voltage regulator 13, and a second terminal of the first resistor R3 is connected to a negative electrode of the first one-directional conduction element D3.

The first terminal of the second resistor R4 is connected to a positive electrode power supply terminal of the LED module 14, and the second terminal of the second resistor R4 is connected to a positive electrode of the first one-directional conduction element D3.

The input of the constant current driving unit U2 is connected to the positive electrode of the first one-directional conduction element D3, and the output of the constant current driving unit U2 is connected to a control terminal of the switch Q1.

The first terminal of the switch Q1 is connected to a negative electrode power supply terminal of the LED module 14, and the second terminal of the switch Q1 is grounded.

The voltage regulator 13 may essentially be understood as consisting of a zener diode and a reference voltage terminal. When the voltage of the external power supply is less than or equal to the preset voltage, the voltage at the cathode terminal of the voltage regulator 13 is constant, and the positive electrode power supply terminal of the LED module 14 provides voltage to the input of the constant current driving unit U2 through the second resistor R4, and the voltage of the positive electrode power supply terminal of the LED module 14 is provided by the converted external power supply. The constant current driving unit U2 drives the switch Q1 to turn on, and the LED module 14 is powered normally. When the voltage of the external power supply is greater than the preset voltage, the zener diode inside the voltage regulator 13 reversely breaks down, and the voltage at the cathode terminal of the voltage regulator 13 is zero, so that the voltage of the input of the constant current driving unit U2 also drops to zero, and the constant current driving unit U2 can not drive the switch Q1 to turn on resulting the power supply loop of the LED module 14 be cut off. The preset voltage is the reference voltage of the voltage regulator 13.

In other embodiment of the present invention, the switch Q1 may be a power MOSFET.

In other embodiment of the present invention, the voltage regulator 13 may be a three-terminal adjustable voltage regulator. The reference voltage of the voltage regulator 13 may be adjusted according to the actual situation. For example, the voltage regulator 13 may be a CJ431-type voltage regulator.

In other embodiment of the present invention, the LED driving circuit may also comprise a filter module.

The filter module is connected to the reference level terminal of the voltage regulator 13.

In other embodiment of the present invention, referring to FIG. 2, the filter module comprises a capacitor C1.

The first terminal of the capacitor C1 is connected to the reference level terminal of the voltage regulator 13, and the second terminal of the capacitor C1 is grounded.

The capacitor C1 can filter the voltage of the reference level terminal of the voltage regulator 13 to prevent hysteresis, and the stability of the LED driving circuit is improved.

In other embodiment of the present invention, referring to FIG. 2, the input of the rectification module 11 comprises a first rectifying input L and a second rectifying input N, and the rectification module 11 comprises a second one-directional conduction element D1 and a third one-directional conduction element D2.

The first terminal of the second one-directional conduction element D1 is connected to the first rectifying input L, and the second terminal of the second one-directional conduction element D1 is connected to the reference level terminal of the voltage regulator 13.

The first terminal of the third one-directional conduction element D2 is connected to the second rectifying input N, and the second terminal of the third one-directional conduction element D2 is connected to the reference level terminal of the voltage regulator 13.

The external power supply may be an AC (Alternating Current). The first rectifying input L may be connected to an AC power terminal, and the second rectifying input N may be connected to an AC return terminal. The AC of the external power supply is rectified by the second one-directional conduction element D1 and the third one-directional conduction element D2, and then converted into a DC (Direct Current) input to the reference level terminal of the voltage regulator 13 and compared with the reference voltage of the voltage regulator 13.

The second one-directional conduction element D1 and the third one-directional conduction element D2 may be diodes.

In other embodiment of the present invention, the LED driving circuit may also comprise a voltage divider module.

The input of the voltage divider module is connected to the output of the rectification module 11, and the output of the voltage divider module is connected to the reference level terminal of the voltage regulator 13.

Since the voltage of the external power supply is relatively high, and the input voltage range of the voltage regulator 13 is limited, the external power supply is converted into DC by the rectification module 11, and then the voltage is reduced by the voltage divider module to be supplied to the voltage regulator 13, which satisfies the input voltage range of the voltage regulator 13. Meanwhile, the voltage division ratio of the voltage divider module may be adjusted according to the input voltage range of the voltage regulator 13 to meet application requirements.

In other embodiment of the present invention, referring to FIG. 2, the voltage divider module may comprise a third resistor R1 and a fourth resistor R2.

The first terminal of the third resistor R1 is connected to the input of the voltage divider module, and the second terminal of the third resistor R1 is connected to the first terminal of the fourth resistor R2.

The first terminal of the fourth resistor R2 is connected to the output of the voltage divider module, and the second terminal of the fourth resistor R2 is grounded.

The voltage division ratio of the voltage divider module may be adjusted by adjusting the resistance of the third resistor R1 and the fourth resistor R2.

In other embodiment of the present invention, the LED driving circuit may also comprise a rectifier bridge U1.

A first input and a second input of the rectifier bridge U1 receive external power supply, and a first output of the rectifier bridge U1 is connected to the positive electrode power supply terminal of the LED module 14, and a second output of the rectifier bridge U1 is grounded.

The external power supply supplies power to the LED module 14 through the rectifier bridge U1, forming the power supply loop.

In other embodiment of the present invention, referring to FIG. 2, the LED module 14 may comprise a transformer T1, a fourth one-directional conduction element D4 and at least one LED light emitting element. The specific connection method will not be repeated.

Corresponding to any one of the above-mentioned LED driving circuits, the embodiment of the present invention also provides an LED lamp. The LED lamp comprises any one of the above-mentioned LED driving circuits, and has the advantages of the above-mentioned LED driving circuits, which will not be repeated here.

## Claims

1. An LED driving circuit, comprises a rectification module (11), a switching module (12) and a voltage regulator (13);
wherein an input of the rectification module (11) is configured to receive external power supply (L, N) of the LED driving circuit, and an output of the rectification module (11) is connected to a reference level terminal of the voltage regulator (13); wherein an anode terminal of the voltage regulator (13) is grounded, and a cathode terminal of the voltage regulator (13) is connected to the switching module (12); wherein the switching module (12) is adapted to be connected in series with an LED module (14) to form a power supply loop;
wherein the switching module (12) is adapted to be turned off according to an off command output by the voltage regulator (13) to cut off a power supply of the LED module (14), when a voltage of the external power supply (L, N) is greater than a preset voltage,
the LED driving circuit being **characterized in that**:
the switching module (12) comprises a first resistor (R3), a second resistor (R4), a first one-directional conduction element (D3), a switch (Q1) and a constant current driving unit (U2);
a first terminal of the first resistor (R3) is connected to the cathode terminal of the voltage regulator (13), and a second terminal of the first resistor (R3) is connected to a negative electrode of the first one-directional conduction element (D3);
the first terminal of the second resistor (R4) is connected to a positive electrode power supply terminal of the LED module (14), and the second terminal of the second resistor (R4) is connected to a positive electrode of the first one-directional conduction element (D3);
the input of the constant current driving unit (U2) is connected to the positive electrode of the first one-directional conduction element (D3), and the output of the constant current driving unit (U2) is connected to a control terminal of the switch (Q1); and
the first terminal of the switch (Q1) is connected to a negative electrode power supply terminal of the LED module (14), and the second terminal of the switch (Q1) is grounded.

2. The LED driving circuit of claim 1, wherein the LED driving circuit also comprises a filter module;
the filter module is connected to the reference level terminal of the voltage regulator (13).

3. The LED driving circuit of claim 2, wherein the filter module comprises a capacitor (C1);
a first terminal of the capacitor (C1) is connected to the reference level terminal of the voltage regulator (13), and a second terminal of the capacitor (C1) is grounded.

4. The LED driving circuit of claim 1, wherein the input of the rectification module (11) comprises a first rectifying input (L) and a second rectifying input (N), and the rectification module (11) comprises a second one-directional conduction element (D1) and a third one-directional conduction element (D2);
wherein a first terminal of the second one-directional conduction element (D1) is connected to the first rectifying input (L), and a second terminal of the second one-directional conduction element (D1) is connected to the reference level terminal of the voltage regulator (13);
wherein the first terminal of the third one-directional conduction element (D2) is connected to the second rectifying input (N), and the second terminal of the third one-directional conduction element (D2) is connected to the reference level terminal of the voltage regulator (13).

5. The LED driving circuit of claim 1, wherein the LED driving circuit also comprises a voltage divider module;
wherein the input of the voltage divider module is connected to the output of the rectification module (11), and the output of the voltage divider module is connected to the reference level terminal of the voltage regulator (13).

6. The LED driving circuit of claim 5, wherein the voltage divider module comprises a third resistor (R1) and a fourth resistor (R2);
wherein a first terminal of the third resistor (R1) is connected to the input of the voltage divider module, and a second terminal of the third resistor (R1) is connected to the first terminal of the fourth resistor (R2);
wherein the first terminal of the fourth resistor (R2) is connected to the output of the voltage divider module, and the second terminal of the fourth resistor (R2) is grounded.

7. The LED driving circuit of claim 1, wherein the LED driving circuit also comprises a rectifier bridge (U1);
wherein a first input and a second input of the rectifier bridge (U1) receive the external power supply, and a first output of the rectifier bridge (U1) is connected to a positive electrode power supply terminal of the LED module (14), and a second output of the rectifier bridge (U1) is grounded.

8. The LED driving circuit of any one of claims 1 to 7, wherein the voltage regulator (13) is a three-terminal adjustable voltage regulator.

9. An LED lamp comprises the LED driving circuit according to any one of claims 1 to 8 and the LED module (14).

## Patentansprüche

1. LED-Ansteuerschaltung, umfassend ein Gleichrichtungsmodul (11), ein Schaltmodul (12) und einen Spannungsregler (13);
wobei ein Eingang des Gleichrichtungsmoduls (11) dazu ausgelegt ist, eine externe Stromversorgung (L, N) der LED-Ansteuerschaltung zu empfangen, und ein Ausgang des Gleichrichtungsmoduls (11) mit einem Referenzpegelanschluss des Spannungsreglers (13) verbunden ist; wobei ein Anodenanschluss des Spannungsreglers (13) mit Masse verbunden ist und ein Kathodenanschluss des Spannungsreglers (13) mit dem Schaltmodul (12) verbunden ist; wobei das Schaltmodul (12) dazu eingerichtet ist, mit einem LED-Modul (14) in Reihe geschaltet zu werden, um eine Stromversorgungsschleife zu bilden; wobei das Schaltmodul (12) dazu eingerichtet ist, gemäß einem durch den Spannungsregler (13) ausgegebenen Ausschaltbefehl ausgeschaltet zu werden, um eine Stromversorgung des LED-Moduls (14) zu trennen, wenn eine Spannung der externen Stromversorgung (L, N) größer als eine voreingestellte Spannung ist, wobei die LED-Ansteuerschaltung **dadurch gekennzeichnet ist, dass**:
das Schaltmodul (12) einen ersten Widerstand (R3), einen zweiten Widerstand (R4), ein erstes unidirektionales Leitelement (D3), einen Schalter (Q1) und eine Konstantstromansteuereinheit (U2) umfasst;
ein erster Anschluss des ersten Widerstands (R3) mit dem Kathodenanschluss des Spannungsreglers (13) verbunden ist und ein zweiter Anschluss des ersten Widerstands (R3) mit einer negativen Elektrode des ersten unidirektionalen Leitelements (D3) verbunden ist;
der erste Anschluss des zweiten Widerstands (R4) mit einem Positivelektrodenstromversorgungsanschluss des LED-Moduls (14) verbunden ist und der zweite Anschluss des zweiten Widerstands (R4) mit einer positiven Elektrode des ersten unidirektionalen Leitelements (D3) verbunden ist;
der Eingang der Konstantstromansteuereinheit (U2) mit der positiven Elektrode des ersten unidirektionalen Leitelements (D3) verbunden ist und der Ausgang der Konstantstromansteuereinheit (U2) mit einem Steueranschluss des Schalters (Q1) verbunden ist; und
der erste Anschluss des Schalters (Q1) mit einem Negativelektrodenstromversorgungsanschluss des LED-Moduls (14) verbunden ist und der zweite Anschluss des Schalters (Q1) mit Masse verbunden ist.

2. LED-Ansteuerschaltung nach Anspruch 1, wobei die LED-Ansteuerschaltung außerdem ein Filtermodul umfasst; wobei das Filtermodul mit dem Referenzpegelanschluss des Spannungsreglers (13) verbunden ist.

3. LED-Ansteuerschaltung nach Anspruch 2, wobei das Filtermodul einen Kondensator (C1) umfasst;
wobei ein erster Anschluss des Kondensators (C1) mit dem Referenzpegelanschluss des Spannungsreglers (13) verbunden ist und ein zweiter Anschluss des Kondensators (C1) mit Masse verbunden.

4. LED-Ansteuerschaltung nach Anspruch 1, wobei der Eingang des Gleichrichtungsmoduls (11) einen ersten Gleichrichtungseingang (L) und einen zweiten Gleichrichtungseingang (N) umfasst und das Gleichrichtungsmodul (11) ein zweites unidirektionales Leitelement (D1) und ein drittes unidirektionales Leitelement (D2) umfasst;
wobei ein erster Anschluss des zweiten unidirektionalen Leitelements (D1) mit dem ersten Gleichrichtungseingang (L) verbunden ist und ein zweiter Anschluss des zweiten unidirektionalen Leitelements (D1) mit dem Referenzpegelanschluss des Spannungsreglers (13) verbunden ist;
wobei der erste Anschluss des dritten unidirektionalen Leitelements (D2) mit dem zweiten Gleichrichtungseingang (N) verbunden ist und der zweite Anschluss des dritten unidirektionalen Leitelements (D2) mit dem Referenzpegelanschluss des Spannungsreglers (13) verbunden ist.

5. LED-Ansteuerschaltung nach Anspruch 1, wobei die LED-Ansteuerschaltung außerdem ein Spannungsteilermodul umfasst;
wobei der Eingang des Spannungsteilermoduls mit dem Ausgang des Gleichrichtungsmoduls (11) verbunden ist und der Ausgang des Spannungsteilermoduls mit dem Referenzpegelanschluss des Spannungsreglers (13) verbunden ist.

6. LED-Ansteuerschaltung nach Anspruch 5, wobei das Spannungsteilermodul einen dritten Widerstand (R1) und einen vierten Widerstand (R2) umfasst;
wobei ein erster Anschluss des dritten Widerstands (R1) mit dem Eingang des Spannungsteilermoduls verbunden ist und ein zweiter Anschluss des dritten Widerstands (R1) mit dem ersten Anschluss des vierten Widerstands (R2) verbunden ist;
wobei der erste Anschluss des vierten Widerstands (R2) mit dem Ausgang des Spannungsteilermoduls verbunden ist und der zweite Anschluss des vierten Widerstands (R2) mit Masse verbunden ist.

7. LED-Ansteuerschaltung nach Anspruch 1, wobei die LED-Ansteuerschaltung außerdem eine Gleichrichterbrücke (U1) umfasst;
wobei ein erster Eingang ein zweiter Eingang der Gleichrichterbrücke (U1) die externe Stromversorgung empfangen und ein erster Ausgang der Gleichrichterbrücke (U1) mit einem Positivelektrodenstromversorgungsanschluss des LED-Moduls (14) verbunden ist und ein zweiter Ausgang der Gleichrichterbrücke (U1) mit Masse verbunden ist.

8. LED-Ansteuerschaltung nach einem der Ansprüche 1 bis 7, wobei der Spannungsregler (13) ein dreipoliger einstellbarer Spannungsregler ist.

9. LED-Lampe, umfassend die LED-Ansteuerschaltung nach einem der Ansprüche 1 bis 8 und das LED-Modul (14) .

## Revendications

1. Circuit de commande de DEL comprenant un module de redressement (11), un module de commutation (12) et un régulateur de tension (13) ;
dans lequel une entrée du module de redressement (11) est configurée pour recevoir une alimentation électrique externe (L,N) du circuit de commande de DEL, et une sortie du module de redressement (11) est connectée à une borne de niveau de référence du régulateur de tension (13) ; dans lequel une borne anodique du régulateur de tension (13) est mise à la terre et une borne cathodique du régulateur de tension (13) est connectée au module de commutation (12) ; dans lequel le module de commutation (12) est conçu pour être connecté en série à un module de DEL (14) afin de former une boucle d'alimentation électrique ;
dans lequel le module de commutation (12) est conçu pour être désactivé en fonction d'une sortie de commande d'arrêt par le régulateur de tension (13) afin de couper une alimentation électrique du module de DEL (14), quand une tension de l'alimentation électrique externe (L, N) est supérieure à une tension prédéfinie,
le circuit de commande de DEL étant **caractérisé en ce que** :
le module de commutation (12) comprend une première résistance (R3), une deuxième résistance (R4), un premier élément de conduction unidirectionnel (D3), un commutateur (Q1) et une unité de commande à courant constant (U2) ;
une première borne de la première résistance (R3) est connectée à la borne cathodique du régulateur de tension (13), et une seconde borne de la première résistance (R3) est connectée à une électrode négative du premier élément de conduction unidirectionnel (D3) ;
la première borne de la deuxième résistance (R4) est connectée à une borne d'alimentation électrique d'électrode positive du module de DEL (14), et la seconde borne de la deuxième résistance (R4) est connectée à une électrode positive du premier élément de conduction unidirectionnel (D3) ;
l'entrée de l'unité de commande à courant constant (U2) est connectée à l'électrode positive du premier élément de conduction unidirectionnel (D3) et la sortie de l'unité de commande à courant constant (U2) est connectée à une borne de commande du commutateur (Q1) ; et
la première borne du commutateur (Q1) est connectée à une borne d'alimentation électrique d'électrode négative du module de DEL (14) et la deuxième borne du commutateur (Q1) est mise à la terre.

2. Circuit de commande de DEL selon la revendication 1, dans lequel le circuit de commande de DEL comprend également un module de filtrage ;
le module de filtrage est connecté à la borne de niveau de référence du régulateur de tension (13).

3. Circuit de commande de DEL selon la revendication 2, dans lequel le module de filtrage comprend un condensateur (C1) ;
une première borne du condensateur (C1) est connectée à la borne de niveau de référence du régulateur de tension (13), et une seconde borne du condensateur (C1) est mise à la terre.

4. Circuit de commande de DEL selon la revendication 1, dans lequel l'entrée du module de redressement (11) comprend une première entrée de redressement (L) et une seconde entrée de redressement (N), et le module de redressement (11) comprend un deuxième élément de conduction unidirectionnel (D1) et un troisième élément de conduction unidirectionnel (D2) ;
dans lequel une première borne du deuxième élément de conduction unidirectionnelle (D1) est connectée à la première entrée de redressement (L), et une seconde borne du deuxième élément de conduction unidirectionnel (D1) est connectée à la borne de niveau de référence du régulateur de tension (13) ;
dans lequel la première borne du troisième élément de conduction unidirectionnel (D2) est connectée à la seconde entrée de redressement (N), et la seconde borne du troisième élément de conduction unidirectionnel (D2) est connectée à la borne de niveau de référence du régulateur de tension (13).

5. Circuit de commande de DEL selon la revendication 1, dans lequel le circuit de commande de DEL comprend également un module diviseur de tension ;
dans lequel l'entrée du module diviseur de tension est connectée à la sortie du module de redressement (11) et la sortie du module diviseur de tension est connectée à la borne de niveau de référence du régulateur de tension (13).

6. Circuit de commande de DEL selon la revendication 5, dans lequel le module diviseur de tension comprend une troisième résistance (R1) et une quatrième résistance (R2) ;
dans lequel une première borne de la troisième résistance (R1) est connectée à l'entrée du module diviseur de tension, et une seconde borne de la troisième résistance (R1) est connectée à la première borne de la quatrième résistance (R2) ;
dans lequel la première borne de la quatrième résistance (R2) est connectée à la sortie du module diviseur de tension et la seconde borne de la quatrième résistance (R2) est mise à la terre.

7. Circuit de commande de DEL selon la revendication 1, dans lequel le circuit de commande de DEL comprend également un pont redresseur (U1) ;
dans lequel une première entrée et une seconde entrée du pont redresseur (U1) reçoivent l'alimentation électrique externe, et une première sortie du pont redresseur (U1) est connectée à une borne d'alimentation d'électrode positive du module DEL (14), et une seconde sortie du pont redresseur (U1) est mise à la terre.

8. Circuit de commande de DEL selon l'une quelconque des revendications 1 à 7, dans lequel le régulateur de tension (13) est un régulateur de tension réglable à trois bornes.

9. Lampe à DEL comprend le circuit de commande de DEL selon l'une quelconque des revendications 1 à 8 et le module de DEL (14).
